# EUROPEAN PATENT APPLICATION

(11) **EP 2 699 010 A1**
(43) Date of publication of application: **19.02.2014**
(21) Application number: 13180454.4
(22) Date of filing: 14.08.2013
(51) Int. Cl.: H04N 21/258, H04N 21/482, H04N 21/25

(54) **Method and apparatus for providing broadcast information**

(30) Priority: 17.08.2012 KR 20120089953
(71) Applicant: Alticast Corporation, Seoul 137-858 (KR)
(72) Inventor: Park, Jong-Hoon, 138-700 Seoul (KR)
(74) Representative: Nederlandsch Octrooibureau

(57) **Abstract**

A method and apparatus for providing broadcast information are disclosed. An embodiment of the invention provides an apparatus for providing broadcast information that is connected to one or more broadcast receiving devices over a network. The apparatus includes: an interest-information collection unit configured to collect interest information from the one or more broadcast receiving devices; and a tag-determining unit configured to determine interest tags for a plurality of programs and an order (interest order) of the interest tags by using the interest information. The interest tags and the interest order are transmitted to the one or more broadcast receiving devices, and the one or more broadcast receiving devices displays the determined interest tags on any one plane of an XY, YZ, and ZX plane in an XYZ coordinate system on a screen and displays general broadcast information on a remaining plane to implement a program guide.

## Description

### BACKGROUND

### 1. Technical Field

The present invention relates to a method and apparatus for providing broadcast information, more particularly to a method and apparatus that can provide broadcast information through a user interface based on a tag flow scheme.

### 2. Description of the Related Art

The broadcast information or electronic program guide (EPG) provided by a conventional TV or STB/PVR through broadcast reception or through a network can provide information on broadcast programs in various forms. However, in today's multi-channel environment, where the number of channels amounting from 100 to 10,000 or more, it can be very difficult and inconvenient for a user to select and view a desired program based on a time-wise broadcast information screen as provided by the EPG having the form of an enormous table. Typical methods most often associated with an EPG include providing information for different channels and different times two-dimensionally in the form of a table, and providing information only for the current channel in a one-dimensional arrangement. The EPG information can also be edited and shown in the form of a preferred-channel EPG. This involves showing specific channels in a specific order, which can also be altered according to the preferences of each individual.

Also, the conventional method for changing TV channels is limited to inputting the channel number or using four direction keys to browse through a channel list (e.g. an EPG, a mini EPG) with a remote control, etc. Thus, in accordance with the broadcasting system, a user may face the inconvenience of having to unnecessarily memorize channel numbers or use a four-direction key input, flicking (for a touch-based RCU), or pointing (for a pointing-based RCU) to browse through a hundred or so channel lists, in order to find a desired channel.

### SUMMARY

An objective of the invention is to provide a method and apparatus which can provide broadcast-related information through an intuitive user interface and which allows an individual user to quickly access a content of interest.

To achieve the objective above, an embodiment of the invention provides an apparatus for providing broadcast information that is connected to one or more broadcast receiving devices over a network. The apparatus includes: an interest-information collection unit configured to collect interest information from the one or more broadcast receiving devices; and a tag-determining unit configured to determine interest tags for a plurality of programs and an order (interest order) of the interest tags by using the interest information. The interest tags and the interest order are transmitted to the one or more broadcast receiving devices, and the one or more broadcast receiving devices displays the determined interest tags on any one plane of an XY, YZ, and ZX plane in an XYZ coordinate system on a screen and displays general broadcast information on a remaining plane to implement a program guide.

The interest information can include at least one of viewing-related information, search information, and SNS (social networking service) exposure information at each broadcast receiving device.

The general broadcast information can include at least one of channel information, program information for a program currently being aired on each channel, time-wise program airing information, multimedia content for each program, and general tag information for each program.

Supposing that the plane displaying the interest tags is the XY plane, the general broadcast information can be displayed on a first plane parallel to the ZX plane, a second plane touching the ZX plane and the YZ plane and parallel to a Z axis, and a third plane parallel to the YZ plane.

The first through third planes can each display any one of channel information, time-wise program airing information, and general tag information for a program being aired.

The general tag information can include at least one of a character, a product, a region, a production crew, and a genre associated with the corresponding program.

Supposing that the third plane displays the time-wise program airing information, the third plane can display the time-wise information along the Y axis.

Supposing that the first plane displays the time-wise program airing information, the first plane can display the time-wise information along the X axis.

The channel information can be displayed divided along the Z axis.

If a user selects any one of the interest tags, the broadcast receiving device can provide control for changing to a channel corresponding to the selected interest tag.

The interest tags can be displayed on a corresponding plane in a flowing scheme.

The tag-determining unit can periodically renew the interest tags.

Another aspect of the invention provides a method for providing broadcast information at a broadcast receiving device. The method includes: receiving at least one of general broadcast information and an interest tag from a service server; and displaying the interest tag on any one plane of an XY, YZ, and ZX plane in an XYZ coordinate system on a screen and displaying the general broadcast information on a remaining plane.

According to certain embodiments of the invention, a user is provided with broadcast information via an intuitive user interface, which allows the user to quickly recognize and access information on programs which have high viewership ratings or which are attracting popular interest from among the programs currently being aired.

The user is also able to configure settings for interest programs (My Favorite Programs) and to quickly recognize and easily access live information on such interest programs.

Additional aspects and advantages of the present invention will be set forth in part in the description which follows, and in part will be obvious from the description, or may be learned by practice of the invention.

### BRIEF DESCRIPTION OF THE DRAWINGS

FIG. 1 illustrates the composition of a system for providing broadcast services according to a preferred embodiment of the invention.
FIG. 2 is a schematic diagram illustrating a user interface displayed on the screen of a broadcast receiving device according to an embodiment of the invention.
FIG. 3 is a schematic diagram illustrating the composition of a user interface displayed on the screen according to another embodiment of the invention.
FIG. 4 is a schematic diagram illustrating a user interface displaying broadcast information according to an embodiment of the invention.
FIG. 5 illustrates the detailed composition of a headend according to an embodiment of the invention.
FIG. 6 is a block diagram of a broadcast receiving device according to an embodiment of the invention.

### DETAILED DESCRIPTION

Certain embodiments of the invention will be described below in more detail with reference to the accompanying drawings. Unless there is specific mention or definition to the contrary, terms used herein which represent directions refer to the directions as shown in the drawings. In each embodiment, like reference numerals indicate like elements. The thicknesses or dimensions of the elements shown in the drawings may be exaggerated for the sake of convenient explanation, and it is to be appreciated that these elements need not actually be formed with the corresponding dimensions or in the ratios represented in the drawings.

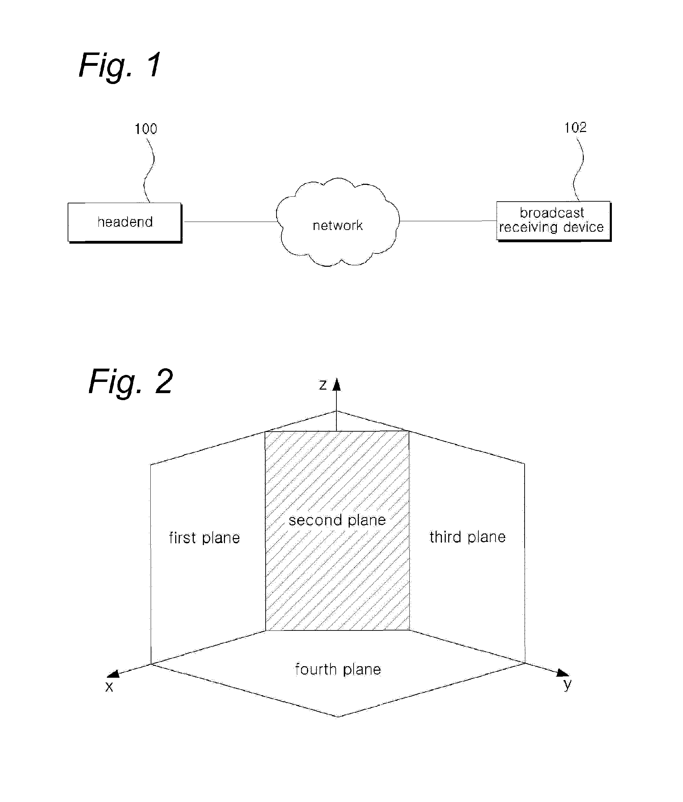

FIG. 1 illustrates the composition of a system for providing broadcast services according to a preferred embodiment of the invention.

As illustrated in FIG. 1, a system for providing broadcast services according to this embodiment can include a headend 100 and a broadcast receiving device 102 connected with the headend 100 over a network.

The headend 100 may provide live programs or on-demand programs according to a preset schedule.

The headend 100 may convert audio and video signals (AV signals) for various broadcast channels into a pre-designated format, and may transmit the converted broadcast signals to the broadcast receiving device 102.

A broadcast receiving device 102 according to this embodiment can include any terminal capable of decoding and outputting the broadcast signals received from the headend 100.

The broadcast receiving device 102 according to this embodiment can be a common TV or set-top box, but is not limited thus. Examples of a broadcast receiving device 102 can include a smart phone, tablet PC, desktop PC, etc., which are capable of receiving broadcast signals.

The descriptions that follow will be provided using an example in which the broadcast receiving device 102 is a set-top box connected to a TV functioning as a screen.

According to a preferred embodiment of the invention, the headend 100 may collect viewing-related information (viewing channel information, viewing on-demand program information, or preferred channel information) from a multiple number of broadcast receiving devices 102, and may also be connected to a particular search server or SNS server to collect interest information such as search information, which may include search keywords and the search rankings of search keywords, and SNS exposure information. The headend 100 may determine interest tags by using the collected interest information, and may transmit these to the broadcast receiving devices 102.

The descriptions that follow will be provided using an example in which a headend 100 providing broadcast programs is connected with a broadcast receiving device 102 to provide interest tags as described above, but the invention is not thus limited. It is to be appreciated that the case of a separate service server being connected with the broadcast receiving device 102 and providing a dynamic tag service is also encompassed within the scope of the invention; the headend 100 in the present embodiment being a concept that encompasses the service server. Also, the headend 100 can be connected with a separate service server, receive the interest tags from the separate service server, and provide the received interest tags to the broadcast receiving device 102. The broadcast receiving device 102 based on the present embodiment may receive general broadcast information and the interest tags from the headend 100 to output a user interface (program guide) such as that shown in FIGs. 2 to 4.

A screen user interface according to an embodiment of the invention is described below with reference to FIG. 2 to FIG. 4, which illustrate a screen composition that can be displayed at a broadcast receiving terminal according to this embodiment.

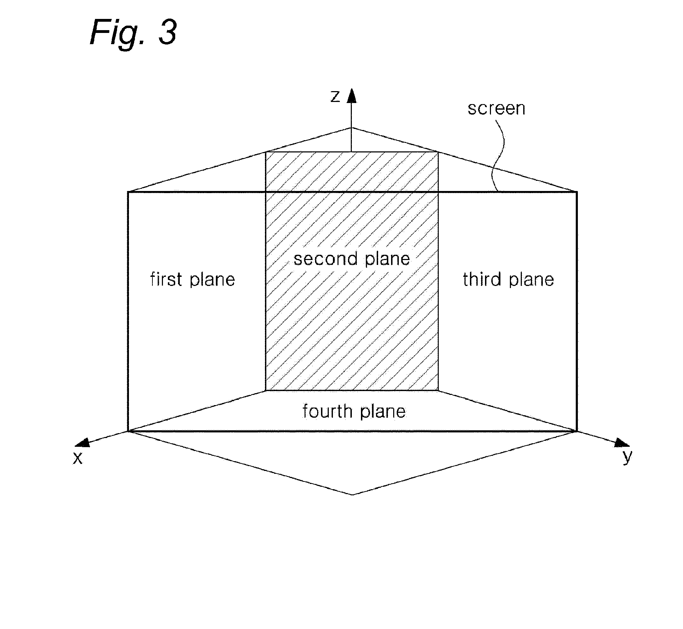

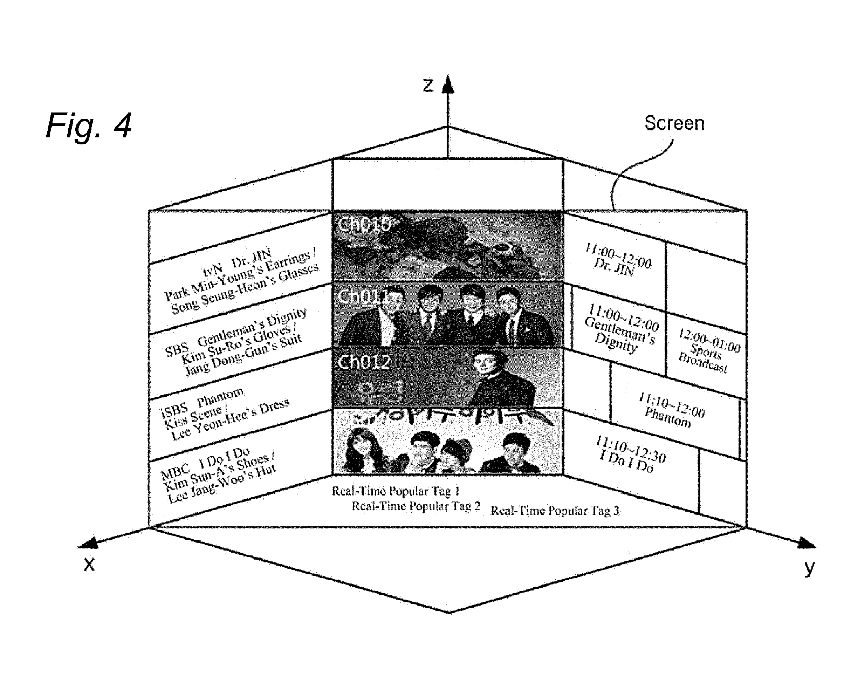

FIG. 2 is a schematic diagram illustrating a user interface displayed on the screen of a broadcast receiving device 102 according to an embodiment of the invention, FIG. 3 is a schematic diagram illustrating the composition of a user interface displayed on the screen according to another embodiment of the invention, and FIG. 4 is a schematic diagram illustrating a user interface displaying broadcast information according to an embodiment of the invention.

To better describe the three-dimensional user interface based on an embodiment of the invention, a description is first provided of the spatial coordinate system. As illustrated in FIG. 2, the spatial coordinate system of this embodiment may be defined by the three axes of X, Y, and Z. In this system of coordinates, a first to a fourth plane can be implemented for displaying various broadcast information by type. The first plane may be positioned parallel to the ZX plane or on the ZX plane. The third plane may be positioned parallel to the YZ plane or on the YZ plane. The second plane may be parallel to the Z axis and may be positioned to be in contact with the first plane and the third plane. The fourth plane may be positioned parallel to the XY plane or on the XY plane. The user interface for this embodiment can be defined as above but is not thus limited. It is also possible, with the fourth plane designated as the bottom plane, to further divide the remaining planes into many planes which form certain angles with respect to each other and which are parallel to the Z axis.

Referring to FIG. 3, the user interface can be configured such that the first plane, second plane, third plane, and fourth plane are displayed on the screen. That is, the viewpoint for the user interface according to this embodiment may be at a point above the XY plane looking down towards the origin point.

The broadcast information displayed on this type of user interface can be divided into general broadcast information and interest tags associated with interest information. The general broadcast information can include channel information, program information for a program currently being aired on each channel, time-wise program airing information, multimedia contents for each program, and general tag information for each program. Here, the multimedia contents can include an image, video, multimedia clip, etc., for each program, while the general tag information can include major keywords for the characters, products, regions, production crew, genre, etc., associated with each program.

Such broadcast information can be shown, for example, as illustrated in FIG. 4. First, the first plane, second plane, and third plane can display general broadcast information, while the fourth plane can display interest tags.

The second plane may display channel identification information, including channel numbers, etc. Here, the information may be displayed with the channels divided along the Z axis. The channel identification information can also include multimedia contents for each content such as those described above. More specifically, a multimedia content can include a multimedia clip for the corresponding program, such as a teaser trailer, a poster image, a representative image, a flash movie, etc. That is, the second plane can be divided into multiple areas along the direction of the Z axis, and each area can display a multimedia clip for the program currently airing on the corresponding channel together with the channel number.

The first plane may be divided into multiple areas along the direction of the Z axis. That is, the first plane may be divided in the same manner as the second plane, with areas corresponding to the divided areas of the second plane. Each area included in the first plane may display general tags for the corresponding channel of the second plane or the program airing on the channel of the second plane. That is, the areas of the first plane can display the characters, products, regions, etc., included in the channels or the programs airing on the channels of the second plane corresponding to the respective areas. For example, if the information displayed in a divided area on the second plane includes channel 10 and a multimedia content for program A that is being aired, then the corresponding divided area of the first plane can display a general tag such as "product C worn by character B appearing on program A".

The third plane can also be divided into multiple areas in the same manner as the first plane. That is, the third plane can be divided to correspond to the areas divided in the second plane. The third plane can display program airing information for different times. Here, the time-wise information can be displayed along the Y axis. That is, it is possible to set the Y axis as the time axis, and display the program information at different positions along the Y axis according to the airing times for the respective programs. Here, the program information displayed for each program can include the title and airing time of the program, as well as other key information for the program if necessary, such as information on the main characters, etc., and in the case of a sports program, information on the type of sports event, the participating teams, etc.

The fourth plane can display interest tags.

The headend 100 can choose the interest tags considering interest information such as the popularity, Internet search rankings, and SNS exposure rankings of the programs and the preferred channels chosen by the user.

To be more specific, the interest tags can be included in a parallel scheme or a hierarchical scheme. In the case of the interest tags belonging to a parallel scheme, a tag for a program can be simply chosen in consideration of the popularity of the program, the frequency of exposure or search on the Internet of the program itself or a content related to the program, the SNS exposure ranking, or a preferred channel inputted directly by the user. In the case of the interest tags belonging to a hierarchical scheme, the tags can include upper-level tags and lower-level tags subordinate to the upper-level tags. Here, an upper-level tag can be the name of a program chosen based on the popularity of the program, the frequency of exposure or search on the Internet of the program itself or a content related to the program, the SNS exposure ranking, or a preferred channel inputted directly by the user. A content related to a program may not only include those associated with a particular object, such as the characters, products, regions, etc., appearing in the program, but may also include various cultural contents such as highlights, edited clips, photographs, images, BGM, etc. These interest tags can be displayed on the fourth plane in a flowing scheme. In order to overcome the spatial limits of the fourth plane, multiple interest tags can be displayed to the user in a flowing manner across the fourth plane.

The interest tags can be renewed periodically to reflect the latest interest information.

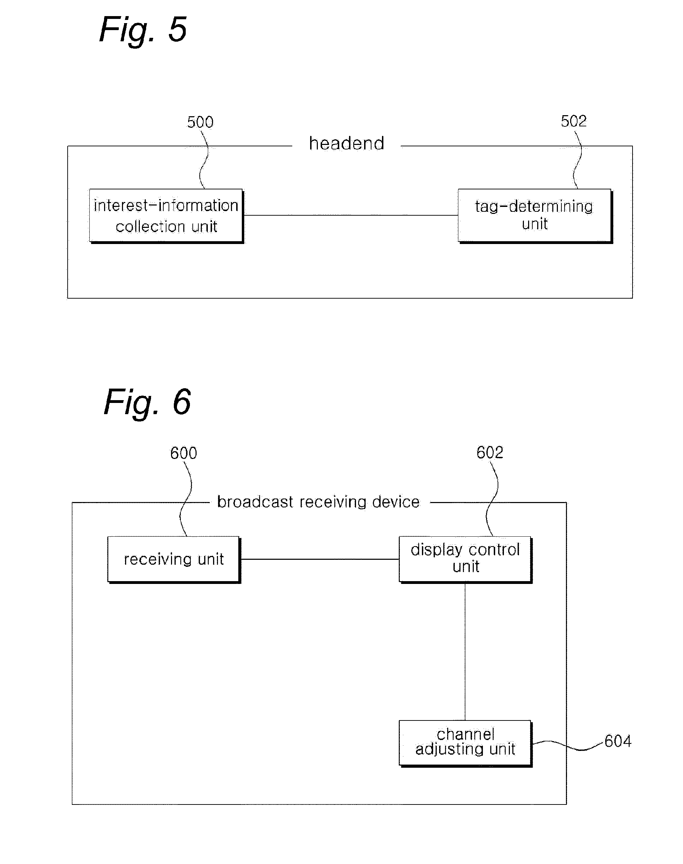

FIG. 5 illustrates the detailed composition of a headend according to an embodiment of the invention.

A headend 100 according to this embodiment can include an interest-information collection unit 500 and an interest tag-determining unit 502.

The interest-information collection unit 500 may collect viewing-related information (viewing channel information and viewing on-demand program information) from a multiple number of broadcast receiving devices 102 and may also be connected with a particular search server or an SNS server to collect interest information such as search information and SNS exposure information.

The tag-determining unit 502 may determine the interest tags by using the interest information collected as above. A tag-determining unit 502 according to this embodiment can apply statistics processing to the interest information to calculate program popularity.

The program popularity can include viewership ratings for live programs and the overall number of requests for on-demand programs.

The tag-determining unit 502 can determine the interest tags by using at least one of program popularity, search rankings, and SNS exposure rankings.

As described above, the tag-determining unit 502 can determine the interest tags and/or their corresponding lower-level tags in a parallel or a hierarchical scheme. Here, the tag-determining unit 502 may determine the interest tags in consideration of at least one of the popularity, Internet search rankings, and SNS exposure rankings of the programs, the names of characters and objects appearing on the TV programs, their related search keywords, and their related multimedia content names.

For example, if the tags are to be determined in a parallel scheme, the tag-determining unit 502 may choose a preset number of TV programs according to popularity, or may determine the interest tags for characters, products, regional names, etc., included in the TV programs in a parallel manner.

In order to maintain the latest results, the tag-determining unit 502 can periodically renew the interest tags in certain intervals.

The general broadcast information and interest tags according to the present embodiment may be transmitted to the broadcast receiving device 102, and the broadcast receiving device 102 may output a user interface, such as that illustrated in FIGs. 2 to 4, when there is a request from the user.

Although the descriptions above are provided using an example in which the headend 100 determines the interest tags by using the interest information, it is also possible to have the headend 100 transmit the interest information to the broadcast receiving devices 102 and have the broadcast receiving devices 102 determine the interest tags using the interest information.

FIG. 6 is a block diagram of a broadcast receiving device according to an embodiment of the invention.

As illustrated in FIG. 6, a broadcast receiving device 102 according to this embodiment can include a receiving unit 600, a display control unit 602, and a channel adjusting unit 604.

The receiving unit 600 may receive the general broadcast information and interest tags from the headend 100.

The display control unit 602 may display the general broadcast information and interest tags on the screen 606. As described above, the display control unit 602 may display the interest tags for one plane in a spatial coordinate system, and may generally display the broadcast information received from the headend 100 on the remaining planes, with the broadcast information divided according to type.

Also, if the user uses a method of selecting, clicking, or touching, etc., to input his/her selection of one of the interest tags that are shown according to the settings pre-configured by the user, it is possible to have the display control unit 602 display lower-level tags related to the corresponding interest tag substitutingly in the area where the interest tags are displayed. The display of the lower-level tags can also employ a flowing scheme, similar to the display scheme of the interest tags.

The channel adjusting unit 604 can provide control such that, if the user selects one of the interest tags displayed on one plane, the channel is changed to the channel corresponding to the selected interest tag, and if the user selects one of the lower-level tags, the channel is changed to the channel corresponding to the lower-level tag selected according to the settings pre-configured by the user.

While the present invention is described above with reference to certain preferred embodiments, the technical spirit of the invention is not limited to the embodiments described above, and the method and apparatus for providing broadcast information can be implemented in various forms without departing from the technical spirit of the present invention as specified in the scope of claims below.

## Claims

1. An apparatus for providing broadcast information, the apparatus connected to one or more broadcast receiving devices over a network, the apparatus comprising:
an interest-information collection unit configured to collect interest information from the one or more broadcast receiving devices; and
a tag-determining unit configured to determine interest tags for a plurality of programs and an order (interest order) of the interest tags by using the interest information,
wherein the interest tags and the interest order are transmitted to the one or more broadcast receiving devices, and the one or more broadcast receiving devices displays the determined interest tags on any one plane of an XY, YZ, and ZX plane in an XYZ coordinate system on a screen and displays general broadcast information on a remaining plane to implement a program guide.

2. The apparatus of claim 1, wherein the interest information comprises at least one of viewing-related information, search information, and SNS (social networking service) exposure information at each broadcast receiving device.

3. The apparatus of claim 1, wherein the general broadcast information comprises at least one of channel information, program information for a program currently being aired on each channel, time-wise program airing information, multimedia content for each program, and general tag information for each program.

4. The apparatus of claim 1, wherein, supposing that a plane displaying the interest tags is the XY plane, the general broadcast information is displayed on a first plane parallel to the ZX plane, a second plane touching the ZX plane and the YZ plane and parallel to a Z axis, and a third plane parallel to the YZ plane.

5. The apparatus of claim 4, wherein the first through third planes each display any one of channel information, time-wise program airing information, and general tag information for a program being aired.

6. The apparatus of claim 5, wherein the general tag information comprises at least one of a character, a product, a region, a production crew, and a genre associated with a corresponding program.

7. The apparatus of claim 5, wherein, supposing that the third plane displays the time-wise program airing information, the third plane displays time-wise information along a Y axis.

8. The apparatus of claim 5, wherein, supposing that the first plane displays the time-wise program airing information, the first plane displays time-wise information along an X axis.

9. The apparatus of claim 5, wherein channel information is displayed divided along the Z axis.

10. The apparatus of claim 1, wherein, if a user selects any one of the interest tags, the broadcast receiving device provides control for changing to a channel corresponding to the selected interest tag.

11. The apparatus of claim 1, wherein the interest tags are displayed on a corresponding plane in a flowing scheme.

12. The apparatus of claim 1, wherein the tag-determining unit periodically renews the interest tags.

13. A method for providing broadcast information at a broadcast receiving device, the method comprising:
receiving at least one of general broadcast information and an interest tag from a service server; and
displaying the interest tag on any one plane of an XY, YZ, and ZX plane in an XYZ coordinate system on a screen and displaying the general broadcast information on a remaining plane.

14. The method of claim 13, wherein the interest tag is determined using at least one of viewing-related information, search information, and SNS exposure information at each broadcast receiving device,
and the displaying comprises displaying the interest tags on a corresponding plane in a flowing scheme
